**Europäisches Patentamt**

(19) **European Patent Office**

**Office européen des brevets**

(11) Veröffentlichungsnummer: **0 132 838**

**B1**

(12) **EUROPÄISCHE PATENTSCHRIFT**

(45) Veröffentlichungstag der Patentschrift:
16.03.88

(51) Int. Cl.⁴: **F 16 M 5/00**

(21) Anmeldenummer: **84108791.9**

(22) Anmeldetag: **25.07.84**

(54) **Maschinenunterbau für darauf aufbaubare und an Antriebe anschliessbare Maschinen und/oder Transporteure.**

(30) Priorität: 27.07.83 DE 3327073
02.03.84 DE 3407785

(43) Veröffentlichungstag der Anmeldung:
13.02.85 Patentblatt 85/7

(45) Bekanntmachung des Hinweises auf die Patenterteilung:
16.03.88 Patentblatt 88/11

(84) Benannte Vertragsstaaten:
AT BE CH DE FR GB IT LI LU NL SE

(56) Entgegenhaltungen:
DE-A-2 115 656
DE-A-3 300 553
DE-C-537 543
DE-C-698 148
FR-A-1 492 012
US-A-2 028 727

(73) Patentinhaber: OSTMA Maschinenbau GmbH,
Golzheimer Strasse 5, D-5352 Zülpich (DE)

(72) Erfinder: Stutz, Erhard, In den Birken 16, D-5353
Mechernich (DE)
Erfinder: Odenthal, Heinz F., Siebengebirgsstrasse
12, D-5352 Zülpich (DE)

(74) Vertreter: Patentanwaltsbüro Cohausz & Florack,
Schumannstrasse 97, D-4000 Düsseldorf 1 (DE)

## Beschreibung

Die Erfindung bezieht sich auf einen Maschinenunterbau für darauf aufbaubare und an Antriebe anschließbare Maschinen und/oder Transporteure, mit mindestens einem eingebauten Antriebsmotor und mehreren gleichartigen, miteinander zu einer starren Einheit lösbar verbundenen, quaderförmigen Kästen mit rastergleichem quadratischen oder rechteckigen Grundriß.

Ein solcher Maschinenunterbau ist aus der DE-A 698 148 bekannt. Diese bekannte Konstruktion läßt es nur sehr begrenzt zu, unterschiedliche Maschinenkonfigurationen zu schaffen.

Bei einem aus der DE-A 21 15 656 bekannten Maschinenunterbau sind die Maschinen und der oder die Transporteure auf einem vom Maschinenunterbau gebildeten, einstückigen Tisch angeordnet. Die Maschinen und Transporteure sind über Verzweigungsgetriebe an einer von dem Antriebsmotor angetriebenen Hauptantriebswelle gekuppelt.

Die Konfigurationen des Tisches und die Anordnung der Antriebsanschlüsse sind entsprechend dem vorgesehenen Einsatz festgelegt. Ist das System z. B. eingerichtet, um an einem Werkstück verschiedene Arbeiten auszuführen, dann bedeutet das, daß die das Werkstück bearbeitenden Maschinen und die das Werkstück zwischen den einzelnen Bearbeitungsvorgängen von Maschine zu Maschine transportierenden Transporteure wegen der Art der ausgewählten Maschinen und ihrer Reihenfolge im Transportweg nicht auch an einem anderen Werkstück andere Arbeiten durchführen können. Um an einem anderen Werkstück anderer Art Arbeiten durchführen zu können, ist eine andere Maschinenkonfiguration erforderlich. Diese andere Maschinenkonfiguration läßt sich bisher nur mit einem anderen Maschinenunterbau verwirklichen.

Der Erfindung liegt die Aufgabe zugrunde, einen Maschinenunterbau der eingangs genannten Art zu schaffen, der für unterschiedlichste Maschinenkonfigurationen verwendbar ist.

Diese Aufgabe wird erfindungsgemäß dadurch gelöst, daß die Kästen eine Durchführung für eine Antriebswelle und an ihrer Oberseite einen Antriebsanschluß für eine Maschine aufweisen.

Gemäß der Erfindung lassen sich aus den Kästen die unterschiedlichsten Formen für den Maschinenunterbau zusammenstellen. Der Benutzer kann deshalb entsprechend den Forderungen des Arbeitsablaufs der an einem Werkstück durchzuführenden Arbeiten den Unterbau optimal gestalten. Da er dafür immer die gleichen Kästen einsetzen kann, kann er auch Arbeiten durchführen, die er sonst wegen der jeweils fälligen Investition eines kompletten Maschinenunterbaues nicht durchführen würde. Selbst wenn die Anschaffungskosten des erfindungsgemäßen Maschinenunterbaus im Vergleich zu einem einteiligen Maschinenunterbau höher liegen, ergibt sich auf die Dauer eine Ersparnis an Investitionskosten.

Sofern der Abstand zwischen zwei in Transportrichtung aufeinanderfolgenden Maschinen so groß ist, daß ein Kasten zwischen den beiden Kästen mit den aufgebauten Maschinen eingefügt werden kann, kann dieser Kasten als gleichartiger Leerkasten ausgebildet sein, oder es können auch andere Distanzelemente, wie Traversen, zwischen den beiden die Maschinen tragenden Einheiten angeordnet werden, die die beiden Kästen miteinander verbinden.

Nach einer Ausgestaltung der Erfindung sind die Verzweigungsgetriebe zweistufige Kegelradgetriebe, von denen die Achsen des Antriebsrades der ersten Stufe und des Abtriebsrades der zweiten Stufe miteinander fluchten, wobei diese beiden Räder über ein gemeinsames Zwischenrad mit senkrecht zu den Achsen der beiden Räder angeordneter Abtriebswelle miteinander gekuppelt sind. Der Einsatz solcher Kegelradgetriebe bietet verschiedene Gestaltungsmöglichkeiten für den Antrieb der aufbaubaren Maschinen. Z. B. können die zweistufigen Kegelradgetriebe als Unter- oder Übersetzungsgetriebe ausgebildet sein. Bei einer Untersetzung kann man mit einer hohen Eingangsdrehzahl in das Getriebe hereingehen und erhält an der Abtriebswelle eine niedrige Drehzahl, die zu einer Laufruhe an der Abtriebswelle führt. Durch die freie Wahl von Unter- und Übersetzungsverhältnissen von Kasten zu Kasten lassen sich die geforderten Drehzahlen an den Abtriebswellen leicht einstellen, ohne daß in einer Stufe eine sehr große Unter- oder Übersetzung vorgesehen sein muß.

Darüber hinaus läßt sich mit einem derart ausgestalteten Kasten mit Verzweigungsgetriebe auf einfache Art und Weise auch eine Drehrichtungsumkehr an der Abtriebswelle dadurch erreichen, daß für die Abtriebswelle des Zwischenrades in gegenüberliegenden Seiten des Kastens jeweils eine Öffnung für einen Antriebsanschluß der aufzubauenden Maschine an den Antrieb vorgesehen ist.

Nach einer weiteren Ausgestaltung der Erfindung besteht jeder Kasten aus einer oberen und unteren Platte und zwei die Platten verbindenden Seitenwänden, sowie dazwischen angeordneten, Durchführungsöffnungen aufweisenden Querwänden, wobei die Seitenwände zu ihren Enden hin offene Aussparungen aufweisen. Solche Kästen haben bei hoher Steifigkeit die gewünschten Befestigungsmöglichkeiten für Antriebsmotor und Getriebe, sowie Öffnungen für die Durchgänge für die Antriebswellen und sind leicht zugänglich für Montagezwecke.

Nach einer weiteren Ausgestaltung der Erfindung sind die benachbarten Kästen, die jeweils an ihren oberen und unteren Rändern eine Nut aufweisen, durch eine in die Nuten eingesetzte Feder formschlüssig verbunden und durch eine Schraubverbindung miteinander verspannt. Diese Ausgestaltung der Erfindung gewährleistet bei leichter Montage die geforderte Steifigkeit der zu einer starren Einheit zusammengeschlossenen Kästen.

Im folgenden wird die Erfindung anhand einer ein Ausführungsbeispiel darstellenden Zeichnung näher erläutert. Im einzelnen zeigen

Fig. 1 einen Maschinenunterbau in perspektivischer Darstellung,

Fig. 2 einen quaderförmigen Kasten in Aufsicht,

Fig. 3 den quaderförmigen Kasten gemäß Fig. 2 aus der Sicht des Pfeils A,

Fig. 4 den quaderförmigen Kasten gemäß Fig. 2 aus der Sicht des Pfeils B und

Fig. 5 die getriebemäßige Kopplung zweier miteinander verbundener Kästen in schematischer Darstellung.

Jeder quaderförmige Kasten hat einen quadratischen Grundriß bzw. ein Vielfaches dieses quadratischen Grundrisses. Jeder Kasten besteht aus einer oberen und unteren Platte 1, 2, die jeweils eine umlaufende Nut 4, 5 aufweisen, aus Seitenwänden 6, 7 und dazwischen angeordneten Trennwänden 8, 9. In der oberen Platte 1 ist eine Öffnung 10 für die Durchführung eines Antriebsanschlusses für die aufzubauende Maschine oder den aufzubauenden Transporteur. Die Öffnung 10 ist bei allen Kästen an derselben Stelle, bezogen auf die quadratische Einheit, angeordnet. Mehrere solcher Öffnungen 10 können bei rechteckigen Kästen vorgesehen sein. Die Seitenwände 6, 7 weisen zu ihren Enden hin offene Ausnehmungen 11 bis 14 auf, während die Trennwände 8, 9 Fenster 15, 16 aufweisen. Die Fenster 15, 16 und die seitlichen Öffnungen zwischen den Seitenwänden 6, 7 ermöglichen den Einbau von Antriebsmotoren und Getriebe sowie die Durchführung von Antriebswellen. Die in den Seitenwänden vorgesehenen Aussparungen 11 bis 14 erleichtern den Zugriff zu den Antriebsteilen und damit deren Montage und dienen außerdem der Durchführung von Antriebswellen.

Der Umbau des Maschinenunterbaus läßt sich leicht durchführen. Ist z. B. der große Abstand zwischen Kästen 19 und 32 nicht mehr erforderlich, kann der Kasten 30 ausgebaut werden, ohne daß davon die Zusammenstellung der anderen Kästen mit den eingebauten Antrieben berührt wird. In diesem Fall ist es lediglich erforderlich, die Schraubverbindung und die Feder-Nut-Verbindung zu lösen. Der Kasten 30 kann dann seitlich herausgezogen werden. Die benachbarten Kästen 19, 32 werden zusammengerückt und deren Wellenenden über entsprechende Kupplung wieder miteinander verbunden. In entsprechender Weise gestaltet sich der komplette Umbau oder Zusammenbau des Unterbaus.

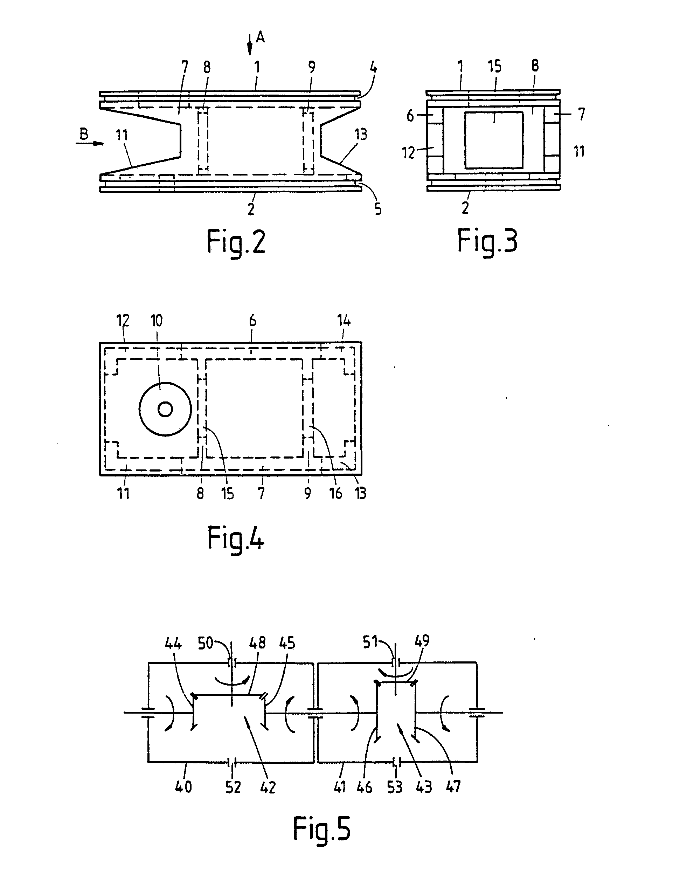

Bei dem in Fig. 5 dargestellten Aufbau sind zwei unterschiedliche, zweistufige Kegelradgetriebe in zwei miteinander verbundenen Kästen 40, 41 untergebracht. Das Kegelradgetriebe 42 im ersten Kasten 40 ist als Untersetzungsgetriebe ausgebildet, während das Kegelradgetriebe 43 im zweiten Kasten 41 als Übersetzungsgetriebe ausgebildet ist.

Der Einsatz eines Zwischenrades 42, 43 zwischen dem Antriebsrad 44, 46 und dem Abtriebsrad 45, 47 eines jeden Kegelradgetriebes 42, 43 bietet die Möglichkeit, auf einfache Art und Weise zu einer Drehrichtungsumkehr an der Abtriebswelle des Zwischenrades 48, 49 zu kommen. Dafür ist es lediglich erforderlich, an den gegenüberliegenden Seiten des Kastens 40, 41 eine Öffnung 50, 51, 52, 53 für den Anschluß des Antriebes einer aufzubauenden Maschine vorzusehen. Durch Umdrehen des Kastens um die gemeinsame Achse der Kegelräder 44 bis 47 ergibt sich eine Drehrichtungsumkehr an den aus dem Kasten nach oben herausgeführten Abtriebswellen der Zwischenräder 48, 49.

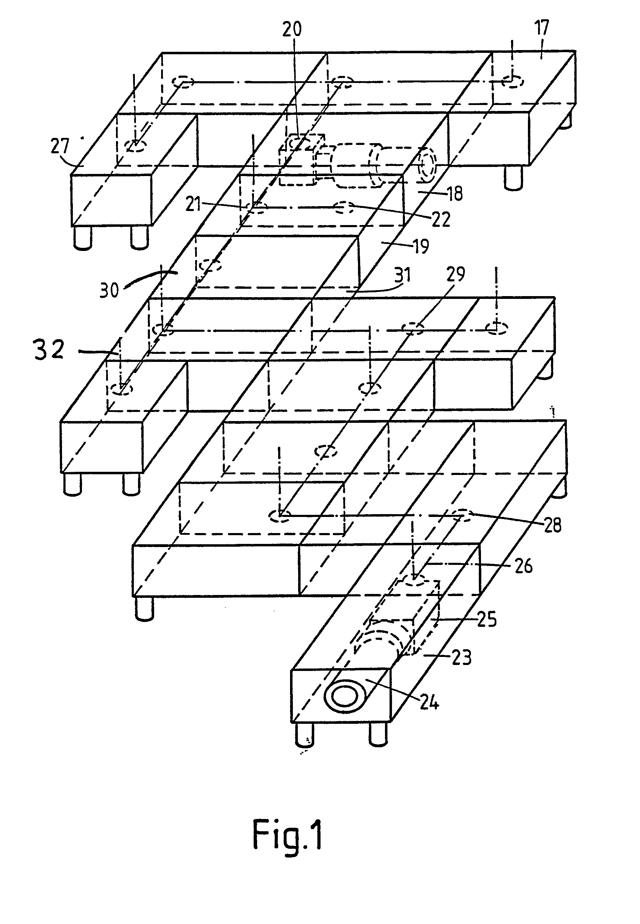

Aus solchen Kästen ist der in Fig. 1 dargestellte Maschinenunterbau zusammengesetzt. Die kleinste Einheit ist ein im Grundriß quadratischer Kasten 17. Ein rechteckiger Kasten 18, 19, der den Grundriß von zwei Quadraten hat, kann im einen Fall eine Öffnung 20 oder zwei Öffnungen 21, 22 in der Oberseite für Antriebsanschlüsse haben. Auch noch längere Einheiten sind möglich. Voraussetzung für die geforderte Zusammenstellbarkeit der einzelnen Kästen ist lediglich, daß jeder Kasten sich aus gleich großen Quadraten zusammensetzt und daß die Öffnungen 20 bis 22, bezogen auf den quadratischen Grundriß, immer an derselben Stelle liegen.

In Fig. 1 ist in einem Kasten 23, der am Ende des Unterbaus angeordnet ist, ein Antriebsmotor 24 mit Getriebe 25 angeordnet. Von diesem Getriebe 25 geht eine strichpunktiert angedeutete Antriebswelle 26 aus, und führt bis in die äußersten Kästen 17, 27. Es versteht sich, daß diese Welle 26 an Umlenkstellen 28 oder Verzweigungsstellen 29 ein entsprechendes Getriebe erforderlich macht. Außerdem müssen Getriebe dort vorgesehen sein, wo Antriebsanschlüsse für aufzubauende Maschinen oder Transporteure benötigt werden. Die Antriebsanschlüsse 30 sind in der Zeichnung durch vertikale, strichpunktierte Linien, angedeutet. Dort wo keine Umlenkstelle oder Verzweigungsstelle oder Antriebsanschluß erforderlich ist, kann die Welle 26 ohne Lager od. dgl. durch den Kasten geführt werden.

Die Anordnung des Motors und des Getriebes kann grundsätzlich in jedem Kasten erfolgen. In der Zeichnung ist gestrichelt angedeutet, daß Motor und Getriebe in einem mittleren Kasten 18 angeordnet sein können.

**Patentansprüche**

1. Maschinenunterbau für darauf aufbaubare und an Antriebe anschließbare Maschinen und/oder Transporteure, mit mindestens einem eingebauten Antriebsmotor (24, 25, 26) und mehreren gleichartigen, miteinander zu einer starren Einheit lösbar verbundenen, quaderförmigen Kästen (17, 18, 19, 23, 27, 32) mit rastergleichem quadratischen oder rechteckigen Grundriß,

dadurch gekennzeichnet, daß die Kästen (17, 18, 19, 23, 27, 32) eine Durchführung für eine Antriebswelle (26) und an ihrer Oberseite einen Antriebsanschluß (30) für eine Maschine aufweisen.

2. Maschinenunterbau nach Anspruch 1, dadurch gekennzeichnet, daß zwischen den Kästen (17, 18, 19, 23, 27, 32) Distanzelemente in Form von Leerkästen (31) sind, die gleichartig den für den Einbau des Antriebsmotors (24) und/oder eines Getriebes (25) eingerichteten Kästen (17, 18, 19, 23, 27) sind.

3. Maschinenunterbau nach Anspruch 1 oder 2, dadurch gekennzeichnet, daß jeder Kasten (17, 18, 19, 23, 27, 32) aus einer oberen und unteren Platte (1, 2) und zwei die Platten (1, 2) verbindende Seitenwände (6, 7) sowie dazwischen angeordnete, Durchführungsöffnungen (15, 16) aufweisende Querwände (8, 9) besteht, wobei die Seitenwände (6, 7) zu ihren Enden hin offene Aussparungen (11-14) aufweisen.

4. Maschinenunterbau nach Anspruch 3, dadurch gekennzeichnet, daß benachbarte Kästen (18, 19, 31), die jeweils an ihren oberen und unteren Rändern eine umlaufende Nut (4, 5) aufweisen, durch eine in die Nuten (4, 5) eingesetzte Feder formschlüssig verbunden und durch eine Schraubenverbindung miteinander verspannt sind.

5. Maschinenunterbau nach einem der Ansprüche 1-4, dadurch gekennzeichnet, daß die Verzweigungsgetriebe (42, 43) zweistufige Kegelradgetriebe sind, von denen die Achsen des Antriebsrades (44, 46) der ersten Stufe und des Abtriebsrades (45, 47) der zweiten Stufe miteinander fluchten und diese beiden Räder (44-47) über ein gemeinsames Zwischenrad (48, 49) mit senkrecht zu den Achsen der beiden Räder (44-47) angeordneter Abtriebswelle miteinander gekuppelt sind.

6. Maschinenunterbau nach Anspruch 5, dadurch gekennzeichnet, daß die zweistufigen Kegelradgetriebe (42, 43) als Unter- oder Übersetzungsgetriebe ausgebildet sind.

7. Maschinenunterbau nach Anspruch 5 oder 6, dadurch gekennzeichnet, daß für die Abtriebswelle des Zwischenrades (48, 49) in gegenüberliegenden Seiten des Kastens (40, 41) jeweils eine Öffnung (50, 51, 52, 53) für Antriebsanschlüsse der aufzubauenden Maschine an den Antrieb vorgesehen ist.

## Claims

1. Machine substructure for machines and/or conveyors that can be built thereon and can be connected to drive mechanisms, having at least one built-in drive motor (24, 25, 26) and a plurality of similar cuboid boxes (17, 18, 19, 23, 27, 32) that are detachably connected to each other to form a rigid unit and have a grid-like square or rectangular outline, characterised in that the boxes (17, 18, 19, 23, 27, 32) have a through guide means for a drive shaft (26) and have on their upper face a drive connection (30) for a machine.

2. Machine substructure according to claim 1, characterised in that between the boxes (17, 18, 19, 23, 27, 32) there are spacing members in the form of empty boxes (31) which are similar to the boxes (17, 18, 19, 23, 27) fitted for the installation of the drive motor (24) and/or a gear (25).

3. Machine substructure according to claim 1 or 2, characterised in that each box (17, 18, 19, 23, 27, 32) comprises an upper and lower plate (1, 2), two lateral walls (6, 7) connecting the plates (1, 2) and transverse walls (8, 9) arranged between them and having through guide apertures (15, 16), the lateral walls (6, 7) having recesses (11-14) open towards their ends.

4. Machine substructure according to claim 3, characterised in that adjacent boxes (18, 19, 31), each of which has at its upper and lower edges an encompassing groove (4, 5), are connected by form-locking by a spring inserted in the grooves (4, 5) and are braced to each other by a screw connection.

5. Machine substructure according to one of claims 1 to 4, characterised in that the branching gears (42, 43) are two-stage mitre gears of which the shafts of the drive wheel (44, 46) of the first stage and of the drive wheel (45, 47) of the second stage are in alignment with each other and these two wheels (44-47) are coupled to each other by a common intermediate wheel (48, 49) having a drive shaft arranged at right-angles to the shafts of the two wheels (44-47).

6. Machine substructure according to claim 5, characterised in that the two-stage mitre gears (42, 43) are designed as step-down or step-up gears.

7. Machine substructure according to claim 5 or 6, characterised in that for the drive shaft of the intermediate wheel (48, 49) one aperture (50, 51, 52, 53) is provided in each opposed side of the box (40, 41) for drive connections of the machine to be built on to the drive mechanism.

## Revendications

1. Bâti pour le montage de machines et/ou de transporteurs pouvant être raccordés à des entraînements, avec au moins un moteur d'entraînement (24, 25, 26) incorporé et plusieurs caisses similaires (17, 18, 19, 23, 27, 32) en forme de parallélépipèdes avec un tracé carré ou rectangulaire en forme de quadrillage reliées les unes aux autres de manière démontable en une unité rigide caractérisé par le fait que les caisses (17, 18, 19, 23, 27, 32) présentent un passage pour un arbre d'entraînement (26) et, sur leur face supérieure, un raccord d'entraînement (30) pour une machine.

2. Bâti de machines selon la revendication 1, caractérisé par le fait que, entre les caisses (17, 18, 19, 23, 27, 32), sont disposés des éléments d'écartement sous forme de caisses vides (31) qui sont similaires aux caisses (17, 18, 19, 23, 27, 32) équipées pour le montage du moteur d'entraînement (24) et/ou d'un engrenage (25).

3. Bâti de machines selon la revendication 1 ou 2, caractérisé par le fait que chaque caisse (17, 18, 19, 23, 27, 32) est constituée d'une plaque supérieure (1) et d'une plaque inférieure (2) et de deux parois latérales (6, 7) reliant les plaques (1, 2), ainsi que de parois transversales (8, 9) disposées entre elles et présentant des ouvertures de passage (15, 16), les parois latérales (6, 7) présentant des évidements (11-14) ouverts en direction de leurs extrémités.

4. Bâti de machines selon la revendication 3, caractérisé par le fait que des caisses adjacentes (18, 19, 31), qui présentent sur leurs bords supérieurs et inférieurs à chaque fois une rainure circulante (4, 5), sont reliées à coopération de formes par une languette logée dans les rainures et croisillonnées l'une avec l'autres par une liaison à vis.

5. Bâti de machines selon l'une des revendications 1 à 4, caractérisé par le fait que les engrenages de dérivation (42, 43) sont des engrenages à roues coniques à deux gradins, dont les axes de la roue d'entraînement (44, 46) du premier gradin et de la roue de sortie (45, 47) du second gradin sont alignés l'un avec l'autre, ces deux roues (44-47) étant accouplées l'une avec l'autre par l'intermédiaire d'une roue intermédiaire (48, 49) commune avec un arbre de sortie disposé orthogonalement aux axes des deux roues (44-47).

6. Bâti de machines selon la revendication 5, caractérisé par le fait que les engrenages à roues coniques (42, 43) à deux gradins forment des engrenages de démultiplication ou de multiplication.

7. Bâti de machines selon la revendication 5 ou 6, caractérisé par le fait que, pour l'arbre de sortie de la roue intermédiaire (48, 49), une ouverture (50, 51, 52, 53) est prévue à chaque fois dans des faces opposées de la caisse (40, 41) pour les raccords d'entraînement de la machine à monter à l'entraînement.

Fig.1

A

7   8        1        9              4

B
11                                    13

2                              5

## Fig.2

1   15        8

6
12                            7

11

2

## Fig.3

12  10          6              14

11      8  15  7      9  16  13

## Fig.4

44  50      48  45          51      49

40    52  42          41  46  53  43  47

## Fig.5